(19) Europäisches Patentamt
European Patent Office
Office européen des brevets

(11) Veröffentlichungsnummer: **0 344 487 B1**

(12) # EUROPÄISCHE PATENTSCHRIFT

(45) Veröffentlichungstag der Patentschrift: **29.12.93**

(51) Int. Cl.$^5$: **C09B 29/042**, D06P 1/18

(21) Anmeldenummer: **89108305.7**

(22) Anmeldetag: **09.05.89**

Die Akte enthält technische Angaben, die nach dem Eingang der Anmeldung eingereicht wurden und die nicht in dieser Patentschrift enthalten sind.

(54) **Azofarbstoffe der 5-Aminoisothiazolreihe.**

(30) Priorität: **17.05.88 DE 3816698**

(43) Veröffentlichungstag der Anmeldung:
**06.12.89 Patentblatt 89/49**

(45) Bekanntmachung des Hinweises auf die Patenterteilung:
**29.12.93 Patentblatt 93/52**

(84) Benannte Vertragsstaaten:
**CH DE FR GB IT LI**

(56) Entgegenhaltungen:
**EP-A- 0 135 131**
**DE-A- 3 207 209**
**GB-A- 2 041 391**

(73) Patentinhaber: **BASF Aktiengesellschaft**
**Carl-Bosch-Strasse 38**
**D-67063 Ludwigshafen(DE)**

(72) Erfinder: **Hansen, Guenter, Dr.**
**Alwin-Mittasch-Platz 8**
**D-6700 Ludwigshafen(DE)**
Erfinder: **Lamm, Gunther, Dr.**
**Heinrich-Heine-Strasse 7**
**D-6733 Hassloch(DE)**
Erfinder: **Reichelt, Helmut, Dr.**
**Johann-Gottlieb-Fiechte-Strasse 56**
**D-6730 Neustadt(DE)**
Erfinder: **Schefczik, Ernst, Dr.**
**Dubliner Strasse 7**
**D-6700 Ludwigshafen(DE)**

**EP 0 344 487 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Isothiazolazofarbstoffe der Formel I

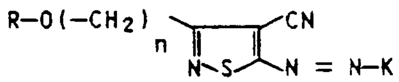

(I),

in der

- R für Wasserstoff, $C_1$-$C_6$-Alkyl oder Phenyl, das gegebenenfalls durch $C_1$-$C_4$-Alkyl, $C_1$-$C_2$-Alkoxy, Chlor, Brom oder Cyano substituiert ist,
- n für 1 oder 2 und
- K für einen Rest der Formel

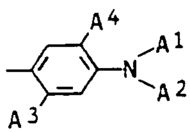

(IIa),

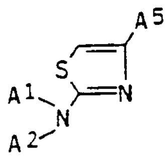

(IIb),

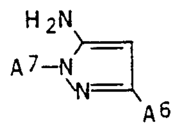

(IIc)

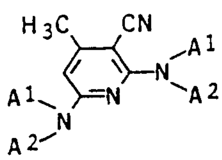

(IId)

oder

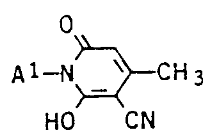

(IIe)

stehen, wobei

- $A^1$ Wasserstoff, $C_1$-$C_8$-Alkyl, das gegebenenfalls durch ein oder zwei Sauerstoffatome unterbrochen und/oder durch Phenyl, Cyano, Hydroxy, $C_1$-$C_4$-Alkanoyloxy, gegebenenfalls substituiertes Benzoyloxy, $C_1$-$C_8$-Alkoxycarbonyl, dessen Alkylkette durch ein oder zwei Sauerstoffatome unterbrochen sein kann, $C_1$-$C_6$-Alkoxycarbonyloxy, $C_1$-$C_8$-Mono- oder Dialkylaminocarbonyloxy, wobei jeweils deren Alkylgruppen durch ein oder zwei Sauerstoffatome unterbrochen sein können, Phenylamino-carbonyloxy oder Phenoxy substituiert ist, $C_3$-$C_5$-Alkenyl, $C_5$-$C_7$-Cycloalkyl oder gegebenenfalls substituiertes Phenyl,
- $A^2$ Wasserstoff oder den Rest $A^1$,
- $A^3$ Wasserstoff, $C_1$-$C_4$-Alkyl, $C_1$-$C_4$-Alkoxy, Chlor, $C_1$-$C_4$-Alkanoylamino, das gegebenenfalls durch $C_1$-$C_4$-Alkoxy, Phenoxy oder Chlor substituiert ist, $C_2$-$C_3$-Alkenoylamino, Benzoylamino, Ureido, $C_1$-$C_4$-Mono- oder Dialkylureido, oder $C_1$-$C_4$-Alkylsulfonylamino,
- $A^4$ Wasserstoff, $C_1$-$C_4$-Alkyl, $C_1$-$C_4$-Alkoxy oder Chlor,
- $A^5$ Wasserstoff, $C_1$-$C_8$-Alkyl, gegebenenfalls substituiertes Phenyl, Furyl, Thienyl oder Pyridyl,
- $A^6$ Wasserstoff, $C_1$-$C_8$-Alkyl oder Phenyl und
- $A^7$ Wasserstoff, $C_1$-$C_8$-Alkyl, das gegebenenfalls durch Phenyl, Furyl oder Thienyl substituiert ist, $C_5$-$C_7$-Cycloalkyl oder Phenyl bedeuten.

sowie deren Verwendung zum Färben von textilen Fasern.

Aus der DE-A-3 001 945, DE-A-3 205 435, DE-A-3 207 209, DE-A-3 330 155, EP-A-227 095 sowie der älteren deutschen Patentanmeldung DE-A-3 738 372 sind bereits Isothiazolazofarbstoffe bekannt, die einen Alkylsubstituenten in Ringposition 3 am Isothiazol aufweisen.

Aufgabe der vorliegenden Erfindung war es, neue Isothiazolazofarbstoffe bereitzustellen, die vorteilhafte anwendungstechnische Eigenschaften aufweisen.

Demgemäß wurden neue Isothiazolfarbstoffe der obengenannten Formel I gefunden.

Reste R in Formel I sind neben Wasserstoff im einzelnen z.B. Methyl, Ethyl, Propyl, Isopropyl, Butyl, Isobutyl, sec-Butyl, Pentyl, Isopentyl, Neopentyl, tert-Pentyl, Hexyl, Phenyl, 2-, 3- oder 4-Methylphenyl, 2-, 3- oder 4-Methoxyphenyl, 2-, 3- oder 4-Ethoxyphenyl, 2-, 3- oder 4-Ethylphenyl, 2-, 3- oder 4-Chlorphenyl, 2-, 3- oder 4-Bromphenyl oder 2-, 3- oder 4-Cyanophenyl.

Alle im Rest K auftretenden Alkyl- und Alkenylreste können sowohl geradkettig als auch verzweigt sein.

Wenn im Rest K substituierte Phenylreste auftreten, kommen als Substituenten, sofern nicht anders vermerkt, beispielsweise $C_1$-$C_4$-Alkyl, $C_1$-$C_4$-Alkoxy oder Halogen, dabei insbesondere Fluor, Chlor oder Brom, $C_1$-$C_4$-Dialkylamino oder Acetylamino in Betracht.

Reste $A^1$, $A^2$, $A^3$, $A^4$, $A^5$, $A^6$ und $A^7$ sind z.B. Methyl, Ethyl, Propyl, Isopropyl, Butyl, Isobutyl oder sec-Butyl.

Reste $A^1$, $A^2$, $A^5$ und $A^7$ sind weiterhin z.B. Pentyl, Isopentyl, Neopentyl, tert-Pentyl, Hexyl, Heptyl, Octyl oder 2-Ethylhexyl.

Reste $A^1$ und $A^2$ sind weiterhin z.B. Benzyl, 1- oder 2-Phenylethyl, Cyanomethyl, 2-Cyanoethyl, 2-Cyanopropyl, 2-Hydroxyethyl, 2-Hydroxypropyl, 1-Hydroxyprop-2-yl, 2-Hydroxybutyl, 1-Hydroxybut-2-yl, 4-Hydroxybutyl, 8-Hydroxy-4-oxaoctyl, 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2-Ethoxypropyl, 2-Propoxypropyl, 2-Phenoxyethyl, 4,7-Dioxaoctyl, 4,8-Dioxadecyl, 3-Benzyloxypropyl, 6-Phenoxy-4-oxahexyl, 2-Acetyloxyethyl, 2-Propionyloxyethyl, 2-Pentanoyloxyethyl, 2-Acetyloxypropyl, 3-Acetyloxypropyl, 2-Propionyloxypropyl, 2-Acetyloxybutyl, 4-Acetyloxybutyl, 2-Propionyloxybutyl, 8-Acetyloxy-4-oxaoctyl, 2-Benzoyloxyethyl, 2-(2-Methylbenzoyloxy)-ethyl, 2-(4-Methylbenzoyloxy)ethyl, 2-(4-Chlorbenzoyloxy)ethyl, 2-(4-Methoxybenzoyloxy)ethyl, 2-Benzoyloxypropyl, 2-Benzoyloxybutyl, Methoxycarbonylmethyl, Ethoxycarbonylmethyl, Propoxycarbonylmethyl, Butoxycarbonylmethyl, 1-(Methoxycarbonyl)ethyl, 2-(Methoxycarbonyl)ethyl, 2-(Ethoxycarbonyl)ethyl, 2-(Propoxycarbonyl)ethyl, 2-(Butoxycarbonyl)ethyl, 2-(Isobutoxycarbonyl)ethyl, 2-(2-Ethylhexyloxycarbonyl)-ethyl, 2-(3-Oxabutyloxycarbonyl)ethyl, 2-(3-Oxapentyloxycarbonyl)ethyl, 2-(3-Oxaheptyloxycarbonyl)ethyl, 2-(Ethoxycarbonyloxy)ethyl, 2-(Butoxycarbonyloxy)ethyl, 4-(Ethoxycarbonyloxy)butyl, 2-(Diethylaminocarbonyloxy)ethyl, 2-(Phenylaminocarbonyloxy)ethyl, Allyl, Methallyl, Cyclopentyl, Cyclohexyl, Methylcyclohexyl oder Cycloheptyl.

Reste $A^3$ und $A^4$ sind weiterhin z.B. Methoxy, Ethoxy, Propoxy, Isopropoxy, Butoxy oder Isobutoxy.

Reste $A^3$ sind weiterhin z.B. Acetylamino, Propionylamino, Methoxyacetylamino, Ethoxyacetylamino, Chloracetylamino, Phenoxyacetylamino, Acryloylamino, Methacryloylamino, N-Methylureido, N-Butylureido, N,N-Dimethylureido, Methylsulfonylamino, Ethylsulfonylamino, Propylsulfonylamino oder Butylsulfonylamino.

Reste $A^1$, $A^2$ und $A^5$ sind weiterhin z.B. 4-Chlorphenyl, 2-, 3- oder 4-Methylphenyl, 2- oder 4-Methoxyphenyl, 2- oder 4-Ethoxyphenyl, 2,4-Dichlorphenyl, 4-Dimethylaminophenyl oder 4-Acetylaminophenyl.

Reste $A^7$ sind weiterhin z.B. Benzyl, 1- oder 2-Phenylethyl, Fur-2-yl-methyl, 2-(Fur-2-yl)ethyl, 2-(Thien-2-yl)ethyl oder 2-(Pyrid-2-yl)ethyl.

Ganz besonders bevorzugt sind Isothiazolazofarbstoffe der Formel I, in der R für $C_1$-$C_4$-Alkyl oder Phenyl und n für 1 oder 2 stehen.

Die Herstellung der erfindungsgemäßen Isothiazolazofarbstoffe erfolgt nach an sich bekannter Weise. Beispielsweise kann man ein 5-Aminoisothiazol der Formel IV

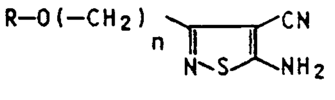

(IV),

in der R und n jeweils die obengenannte Bedeutung besitzen, diazotieren und mit einer Kupplungskomponente der Formel HK, in der K die obengenannte Bedeutung besitzt, kuppeln.

Bei den Kupplungskomponenten HK handelt es sich im allgemeinen um bekannte Verbindungen. Sie sind z.B. in J.M. Straley, in "The Chemistry of Synthetic Dyes", Vol. III, Ed. K. Venkatamaran, Academic Press, New York, 1970; Dyes and Pigments Vol. 3 (1982), 133-160; BE-A-727 081 sowie Rev. Progr. Coloration Vol. 17 (1987), 72-85, beschrieben.

Die Diazokomponenten II sind ebenfalls bekannt oder können nach an sich bekannten Methoden, wie sie beispielsweise in der älteren deutschen Patentanmeldung DE-A-3 804 394 beschrieben sind, hergestellt werden.

Die neuen Isothiazolazofarbstoffe der Formel I eignen sich in vorteilhafter Weise als Dispersionsfarbstoffe zum Färben textiler Fasern, insbesondere von Celluloseestern oder Polyestern aber auch von Polyamiden oder Mischgeweben aus Polyestern und Cellulosefasern.

Man erhält Färbungen mit guten Echtheiten. Besonders hervorzuheben sind dabei die gute Lichtechtheit und die Brillanz der Farbstoffe, insbesondere auf Polyester.

Die folgenden Beispiele sollen die Erfindung näher erläutern. In ihnen beziehen sich die Angaben über Prozente, sofern nicht anders vermerkt, auf das Gewicht.

Beispiel 1

4,58 g 5-Amino-4-cyano-3-(2-methoxyethyl)isothiazol wurden in 35 ml Eisessig/Propionsäure (3:1) eingetragen. Bei 0 bis 5 °C wurden 8,25 g Nitrosylschwefelsäure (11,5 % $N_2O_3$) zugetropft. Anschließend ließ man 4 Stunden bei 0 bis 5 °C rühren.

5,3 g N-Butyl-N-(2-cyanoethyl)anilin, gelöst in 50 ml N,N-Dimethylformamid, wurden in 100 g Eis und 0,5 g Amidosulfonsäure vorgelegt und die oben hergestellte Diazoniumsalzlösung bei max. 5 °C unter Zugabe weiterer 200 g Eis zugetropft. Man ließ 4 Stunden bei 0 bis 5 °C und 12 Stunden bei Raumtemperatur rühren. Die Farbstoffsuspension wurde filtriert, der Filterkuchen mit Wasser neutral gewaschen und getrocknet. Man erhielt 8,9 g des Farbstoffs der Formel

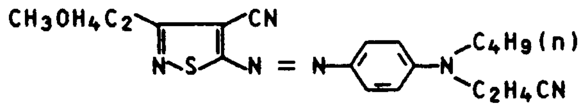

der Polyester in klarer roter Nuance mit sehr guten Echtheiten färbt ($\lambda_{max}$ ($CH_2Cl_2$): 513 nm).

Beispiel 2

4,58 g 5-Amino-4-cyano-3-(2-methoxyethyl)isothiazol wurden analog Beispiel 1 diazotiert und auf 4,54 g 5-Amino-1-benzylpyrazol gekuppelt. Es wurden 8,5 g des Farbstoffs der Formel

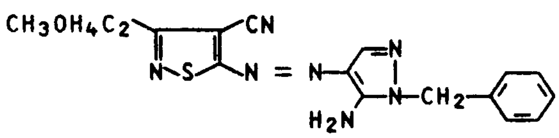

erhalten, der Polyesterfasermaterial in echten goldgelben Tönen färbt ($\lambda_{max}$ ($CH_2Cl_2$): 452 nm).

Beispiel 3

Man verfuhr analog Beispiel 1, setzte als Kupplungskomponente jedoch 6,88 g 3-Cyano-2-(N,N-diethylamino)-6-[N-(2-methoxyethyl)amino]-4-methylpyridin ein. Man erhielt 10,8 g des Farbstoffs der Formel

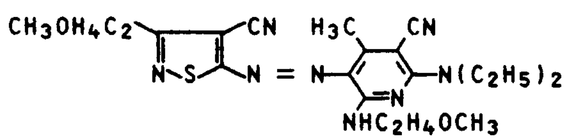

der Polyester in brillanten scharlachroten Tönen färbt ($\lambda_{max}$ ($CH_2Cl_2$): 520 nm).

Beispiel 4

Man verfuhr analog Beispiel 1, setzte als Diazokomponente jedoch 4,93 g 5-Amino-4-cyano-3-(2-ethoxyethyl)isothiazol und als Kupplungskomponente 6,25 g 2-(N,N-Diethylamino)-4-(thien-2-yl)thiazol ein. Man erhielt 10,5 g des Farbstoffs der Formel

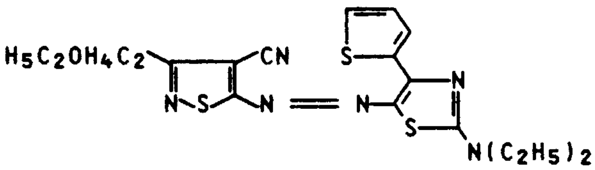

der Polyestermaterial in echten rotstichig-blauen Tönen färbt ($\lambda_{max}$ ($CH_2Cl_2$): 575 nm).

In analoger Weise werden die in den folgenden Tabellen 1 bis 3 aufgeführten Farbstoffe erhalten.

Tabelle 1

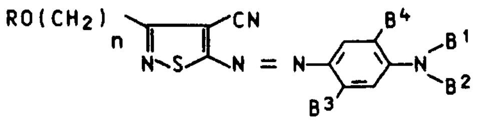

| Bsp.-Nr. | R | n | $B^1$ | $B^2$ | $B^3$ | $B^4$ | Farbton auf Polyester (PES) |
|---|---|---|---|---|---|---|---|
| 5 | $CH_3$ | 2 | $C_2H_5$ | $C_2H_5$ | H | H | violett |
| 6 | $CH_3$ | 2 | $C_2H_4OCH_3$ | $C_2H_4OCH_3$ | H | H | violett |
| 7 | $CH_3$ | 2 | $C_2H_4OCOCH_3$ | $C_2H_4OCOCH_3$ | $CH_3$ | H | rubin |
| 8 | $CH_3$ | 2 | $C_2H_4C_6H_5$ | $C_2H_4CN$ | H | H | rot |
| 9 | $CH_3$ | 2 | $C_2H_4OCOC_2H_5$ | $C_2H_4OCOC_2H_5$ | Cl | H | rot |
| 10 | $CH_3$ | 2 | $C_2H_4OCOC_2H_5$ | $C_2H_4CN$ | H | H | rot |
| 11 | $CH_3$ | 2 | $C_2H_4CN$ | $CH_2CH{=}CH_2$ | H | H | rot |
| 12 | $CH_3$ | 2 | $C_2H_4OCOCH_3$ | $C_2H_4OCOCH_3$ | $CH_3$ | $OCH_3$ | violett |
| 13 | $CH_3$ | 2 | $CH_2CH{=}CH_2$ | $CH_2CH{=}CH_2$ | $NHCOCH_3$ | $OCH_3$ | rotst. blau |
| 14 | $CH_3$ | 2 | $C_2H_4CO_2C_2H_4OC_2H_5$ | $C_2H_5$ | H | H | rot |
| 15 | $CH_3$ | 2 | $C_2H_4CN$ | $C_2H_5$ | $CH_3$ | H | rubin |
| 16 | $CH_3$ | 2 | $C_2H_4CO_2CH_3$ | $C_2H_5$ | H | H | rot |
| 17 | $CH_3$ | 2 | $C_2H_4OH$ | $C_4H_9$ | $CH_3$ | H | violett |
| 18 | $CH_3$ | 2 | $C_2H_5$ | $C_2H_5$ | $NHCOCH_3$ | H | violett |
| 19 | $CH_3$ | 2 | $C_2H_4OCOCH_3$ | $C_2H_5$ | $CH_3$ | H | violett |
| 20 | $CH_3$ | 2 | $C_2H_4OCOCH_3$ | $C_2H_4OCOCH_3$ | H | H | rot |
| 21 | $C_2H_5$ | 2 | $C_2H_4CN$ | $C_2H_5$ | $CH_3$ | H | rubin |
| 22 | $C_2H_5$ | 2 | $CH_2C_6H_5$ | $C_2H_4CO_2CH_3$ | H | H | rot |
| 23 | $C_2H_5$ | 2 | $C_2H_5$ | $C_2H_5$ | H | H | violett |
| 24 | $C_4H_9$ | 2 | $C_2H_4$ | $C_2H_5$ | H | H | rot |
| 25 | $CH_3$ | 1 | $C_2H_4CN$ | $C_2H_5$ | $CH_3$ | H | rubin |
| 26 | $CH_3$ | 1 | $C_2H_4CO_2CH_3$ | $C_2H_5$ | H | H | rot |
| 27 | $CH_3$ | 1 | $C_2H_4OH$ | $C_4H_9$ | $CH_3$ | H | violett |
| 28 | $C_4H_9$ | 2 | $C_2H_5$ | $C_2H_5$ | $NHCOCH_3$ | H | violett |
| 29 | $C_4H_9$ | 2 | $C_2H_4OCOCH_3$ | $C_2H_5$ | $CH_3$ | H | violett |
| 30 | $C_4H_9$ | 2 | $C_2H_4OCOCH_3$ | $C_2H_4OCOCH_3$ | H | H | rot |
| 31 | $C_4H_9$ | 2 | $C_4H_9$ | $C_2H_4CN$ | H | H | rot |
| 32 | $C_4H_9$ | 2 | $CH_2C_6H_5$ | $C_2H_4CO_2C_4H_9$ | H | H | rot |

Tabelle 2

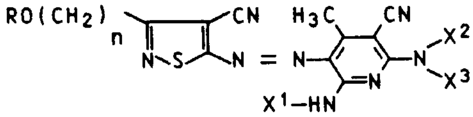

| Bsp.-Nr. | R | n | $X^1$ | $X^2$ | $X^3$ | Farbton auf PES |
|---|---|---|---|---|---|---|
| 33 | $CH_3$ | 2 | H | H | $C_3H_6OC_2H_4OCH_3$ | orange-rot |
| 34 | $C_2H_5$ | 2 | H | H | $C_3H_6OC_2H_4OC_2H_5$ | orange-rot |
| 35 | $CH_3$ | 2 | H | H | $C_3H_6O(C_2H_4O)_2C_2H_5$ | orange-rot |
| 36 | $CH_3$ | 2 | H | H | $C_3H_6OC_4H_8OCOCH_3$ | orange-rot |
| 37 | $CH_3$ | 2 | $C_3H_6OCH_3$ | $C_2H_4OCH_3$ | $C_2H_4OCH_3$ | rot |
| 38 | $CH_3$ | 2 | $CH(C_2H_5)CH_2OCOCH_3$ | $C_2H_4OCH_3$ | $C_2H_4OCH_3$ | rot |
| 39 | $CH_3$ | 2 | $C_3H_6OCH_3$ | $C_2H_4OCOCH_3$ | $C_2H_5$ | rot |
| 40 | $C_2H_5$ | 2 | $C_3H_6OC_2H_4OCH_3$ | H | H | orange-rot |
| 41 | $CH_3$ | 2 | $C_3H_6O(C_2H_4O)_2C_2H_5$ | H | H | orange-rot |
| 42 | $CH_3$ | 2 | $C_3H_6O(C_2H_4O)_2C_2H_5$ | $C_3H_6OCH_3$ | H | rot |
| 43 | $CH_3$ | 2 | $C_3H_6O(C_2H_4O)_2CH_3$ | $C_6H_5$ | H | rosa |
| 44 | $C_4H_9$ | 2 | $C_3H_6O(C_2H_4O)_2CH_3$ | 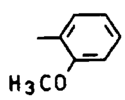 | H | rosa |
| 45 | $CH_3$ | 2 | $C_2H_5$ | $C_3H_6O(C_2H_4O)_2CH_3$ | H | rot |
| 46 | $CH_3$ | 2 | $C_2H_5$ | $C_3H_6OC_4H_8OH$ | H | rot |
| 47 | $C_4H_9$ | 2 | $C_2H_4OCH_3$ | $C_3H_6OC_4H_8OH$ | H | rot |
| 48 | $CH_3$ | 2 | $C_3H_6OCH_3$ | $C_3H_6OC_4H_8OH$ | H | rot |
| 49 | $CH_3$ | 2 | $C_3H_6OCOCH_3$ | $C_3H_6OC_2H_4OC_2H_5$ | H | rot |
| 50 | $CH_3$ | 2 | $C_2H_5$ | $C_2H_4OCH_3$ | $C_2H_4OCH_3$ | rot |
| 51 | $CH_3$ | 2 | $C_3H_6OC_2H_4OCH_3$ | 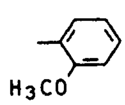 | H | rot |
| 52 | $CH_3$ | 2 | $C_2H_4OCH_3$ | $C_2H_4OCH_3$ | H | rot |
| 53 | $C_2H_5$ | 2 | H | H | $C_3H_6OC_2H_4OCH_3$ | orange-rot |
| 54 | $CH_3$ | 1 | H | H | $C_3H_6OC_2H_4OC_2H_5$ | orange-rot |

Tabelle 2 (Forts.)

| Bsp.-Nr. | R | n | $X^1$ | $X^2$ | $X^3$ | Farbton auf PES |
|---|---|---|---|---|---|---|
| 55 | $C_4H_9$ | 2 | H | H | $C_3H_6O(C_2H_4O)_2C_2H_5$ | orange-rot |
| 56 | $C_3H_7$ | 2 | H | H | $C_3H_6OC_4H_8OCOCH_3$ | orange-rot |
| 57 | $C_2H_5$ | 1 | $C_3H_6OCH_3$ | $C_2H_4OCH_3$ | $C_2H_4OCH_3$ | rot |
| 58 | $CH_3$ | 1 | $CH(C_2H_5)CH_2OCOCH_3$ | $C_2H_4OCH_3$ | $C_2H_4OCH_3$ | rot |
| 59 | $C_4H_9$ | 2 | $C_3H_6OCH_3$ | $C_2H_4OCOCH_3$ | $C_2H_5$ | rot |
| 60 | $C_4H_9$ | 2 | $C_2H_5$ | $C_2H_4OCH_3$ | $C_2H_4OCH_3$ | rot |

Tabelle 3

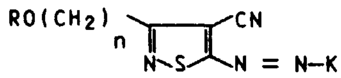

| Bsp.-Nr. | R | n | —K | Farbton auf PES |
|---|---|---|---|---|
| 61 | $CH_3$ | 2 | 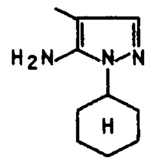 | goldgelb |
| 62 | $CH_3$ | 2 | 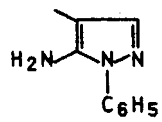 | goldgelb |
| 63 | $CH_3$ | 2 | 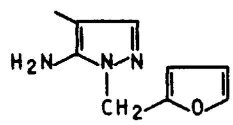 | goldgelb |
| 64 | $CH_3$ | 2 | 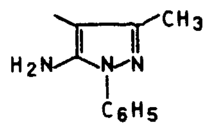 | goldgelb |
| 65 | $C_2H_5$ | 2 | 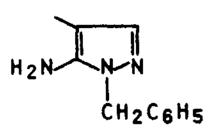 | goldgelb |
| 66 | $CH_3$ | 2 | 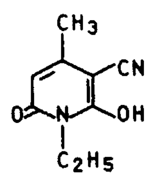 | gelb |
| 67 | $CH_3$ | 2 | 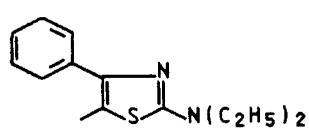 | blauviolett |

Fortsetzung - Tabelle 3

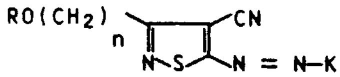

| Bsp.-Nr. | R | n | −K | Farbton auf PES |
|---|---|---|---|---|
| 68 | $CH_3$ | 2 | 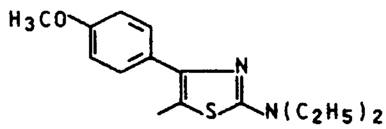 | rotstichig blau |
| 69 | $C_2H_5$ | 2 | 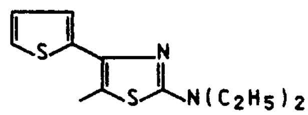 | blau |
| 70 | $CH_3$ | 1 | 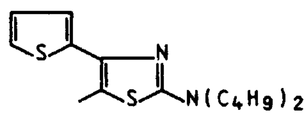 | blau |
| 71 | $CH_3$ | 2 | 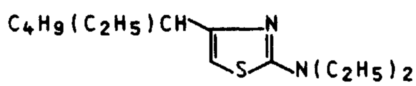 | violett |
| 72 | $CH_3$ | 2 | 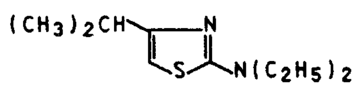 | violett |
| 73 | $C_4H_9$ | 2 | 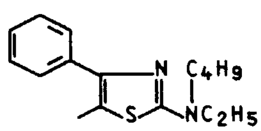 | blauviolett |
| 74 | $C_4H_9$ | 2 | 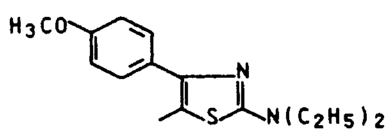 | rotstichig blau |
| 75 | $C_3H_7$ | 2 | 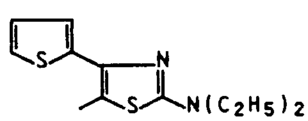 | blau |

Fortsetzung - Tabelle 3

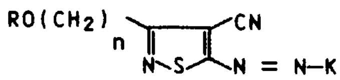

| Bsp.-Nr. | R | n | −K | Farbton auf PES |
|---|---|---|---|---|
| 76 | $C_2H_5$ | 2 | 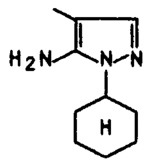 | goldgelb |
| 77 | $C_4H_9$ | 2 | 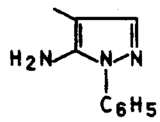 | goldgelb |
| 78 | $C_4H_9$ | 2 | 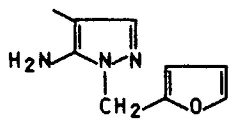 | goldgelb |
| 79 | $C_4H_9$ | 2 | 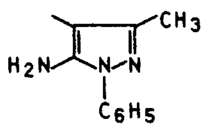 | goldgelb |
| 80 | $CH_3$ | 2 | 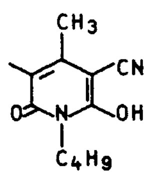 | gelb |
| 81 | $CH_3$ | 2 | 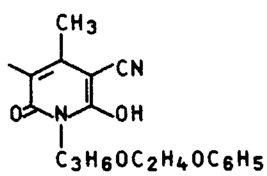 | gelb |

## Patentansprüche

**1.** Isothiazolazofarbstoffe der Formel I

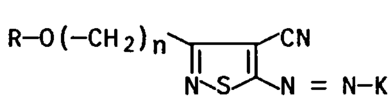

(I),

in der

R für Wasserstoff, $C_1$-$C_6$-Alkyl oder Phenyl, das gegebenenfalls durch $C_1$-$C_4$-Alkyl, $C_1$-$C_2$-Alkoxy, Chlor, Brom oder Cyano substituiert ist,

n für 1 oder 2 und

K für einen Rest der Formel

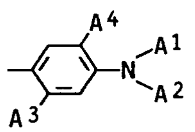 ,

(IIa)

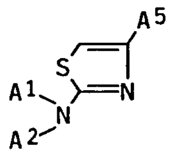 ,

(IIb)

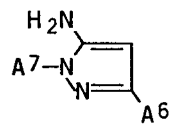

(IIc)

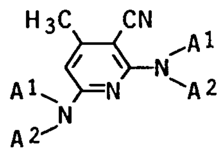

(IId)

oder

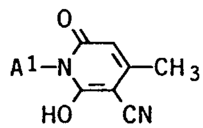

(IIe)

stehen, wobei

$A^1$ Wasserstoff, $C_1$-$C_8$-Alkyl, das gegebenenfalls durch ein oder zwei Sauerstoffatome unterbrochen und/oder durch Phenyl, Cyano, Hydroxy, $C_1$-$C_4$-Alkanoyloxy, gegebenenfalls substituiertes Benzoyloxy, $C_1$-$C_8$-Alkoxycarbonyl, dessen Alkylkette durch ein oder zwei Sauerstoffatome unterbrochen sein kann, $C_1$-$C_6$-Alkoxycarbonyloxy, $C_1$-$C_8$-Mono- oder Dialkylaminocarbonyloxy, wobei jeweils deren Alkylgruppen durch ein oder zwei Sauerstoffatome unterbrochen sein können, Phenylaminocarbonyloxy oder Phenoxy substituiert ist, $C_3$-$C_5$-Alkenyl, $C_5$-$C_7$-Cycloalkyl oder gegebenenfalls substituiertes Phenyl,

$A^2$ Wasserstoff oder den Rest $A^1$,

$A^3$ Wasserstoff, $C_1$-$C_4$-Alkyl, $C_1$-$C_4$-Alkoxy, Chlor, $C_1$-$C_4$-Alkanoylamino, das gegebenenfalls durch $C_1$-$C_4$-Alkoxy, Phenoxy oder Chlor substituiert ist, $C_2$-$C_3$-Alkenoylamino, Benzoylamino, Ureido, $C_1$-$C_4$-Mono- oder Dialkylureido, oder $C_1$-$C_4$-Alkylsulfonylamino,

$A^4$ Wasserstoff, $C_1$-$C_4$-Alkyl, $C_1$-$C_4$-Alkoxy oder Chlor,

$A^5$ Wasserstoff, $C_1$-$C_8$-Alkyl, gegebenenfalls substituiertes Phenyl, Furyl, Thienyl oder Pyridyl,

$A^6$ Wasserstoff, $C_1$-$C_8$-Alkyl oder Phenyl und

$A^7$ Wasserstoff, $C_1$-$C_8$-Alkyl, das gegebenenfalls durch Phenyl, Furyl oder Thienyl substituiert ist, $C_5$-$C_7$-Cycloalkyl oder Phenyl bedeuten.

**2.** Verwendung der Isothiazolazofarbstoffe gemäß Anspruch 1 zum Färben von textilen Fasern.

## Claims

**1.** Isothiazoleazo dyes of the formula I

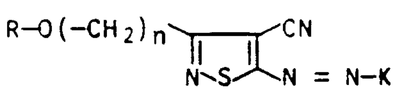

(I)

where

R is hydrogen, $C_1$-$C_6$-alkyl or phenyl which may be substituted by $C_1$-$C_4$-alkyl, $C_1$-$C_2$-alkoxy, chlorine, bromine or cyano,

n is 1 or 2, and

K is a radical of the formula

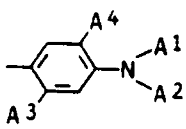 ,

(IIa)

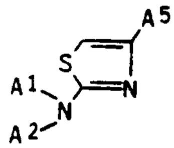 ,

(IIb)

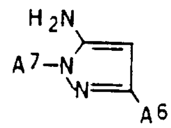

(IIc)

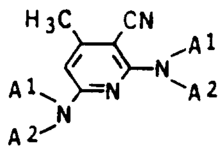

(IId)

or

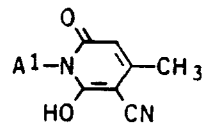

(IIe)

where

- $A^1$ is hydrogen, $C_1$-$C_8$-alkyl which may be interrupted by one or two oxygen atoms and/or substituted by phenyl, cyano, hydroxyl, $C_1$-$C_4$-alkanoyloxy, substituted or unsubstituted benzoyloxy, $C_1$-$C_8$-alkoxycarbonyl whose alkyl chain may be interrupted by one or two oxygen atoms, $C_1$-$C_6$-alkoxycarbonyloxy, $C_1$-$C_8$-mono- or -dialkylaminocarbonyloxy, where in each case the alkyl(s) may be interrupted by one or two oxygen atoms, phenylaminocarbonyloxy or phenoxy, or is $C_3$-$C_5$-alkenyl, $C_5$-$C_7$-cycloalkyl or substituted or unsubstituted phenyl,
- $A^2$ is hydrogen or the radical $A^1$,
- $A^3$ is hydrogen, $C_1$-$C_4$-alkyl, $C_1$-$C_4$-alkoxy, chlorine, $C_1$-$C_4$-alkanoylamino which may be substituted by $C_1$-$C_4$-alkoxy, phenoxy or chlorine, $C_2$-$C_3$-alkenoylamino, benzoylamino, ureido, $C_1$-$C_4$-mono- or -dialkylureido, or $C_1$-$C_4$-alkylsulfonylamino,
- $A^4$ is hydrogen, $C_1$-$C_4$-alkyl, $C_1$-$C_4$-alkoxy or chlorine,
- $A^5$ is hydrogen, $C_1$-$C_8$-alkyl, substituted or unsubstituted phenyl, furyl, thienyl or pyridyl,
- $A^6$ is hydrogen, $C_1$-$C_8$-alkyl or phenyl, and
- $A^7$ is hydrogen, $C_1$-$C_8$-alkyl which may be substituted by phenyl, furyl or thienyl, $C_5$-$C_7$-cycloalkyl or phenyl.

**2.** The use of the isothiazoleazo dyes of claim 1 for dyeing textile fibers.

## Revendications

**1.** Colorants azoïques de la série de l'isothiazole de formule I

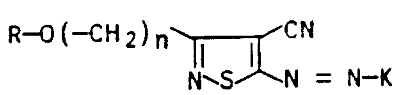 (I),

dans laquelle

- R est mis pour un atome d'hydrogène ou pour un radical alkyle en $C_1$-$C_4$ ou phényle qui est éventuellement substitué par un reste alkyle en $C_1$-$C_4$, alcoxy en $C_1$-$C_2$, chloro, bromo ou cyano,
- n est mis pour 1 ou 2 et
- K est mis pour un reste de formule

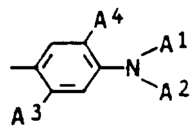 , 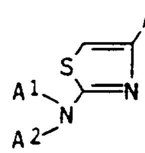 , 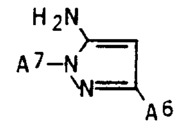

(IIa) (IIb) (IIc)

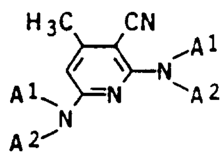 ou 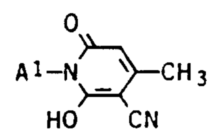

(IId) (IIe)

dans laquelle

- $A^1$ représente un atome d'hydrogène, un radical alkyle en $C_1$-$C_8$, qui est éventuellement interrompu par un ou deux atomes d'oxygène et/ou substitué par un groupement phényle, cyano, hydroxy, alcanoyloxy en $C_1$-$C_4$, benzoyloxy éventuellement substitué, (alcoxy en $C_1$-$C_8$)carbonyle dont la chaîne alkyle peut être interrompue par un ou deux atomes d'oxygène, (alcoxy en $C_1$-$C_6$)carbonyloxy, mono- ou di(alkyl en $C_1$-$C_8$)aminocarbonyloxy dont le groupement alkyle peut être interrompu par un ou deux atomes d'oxygène, phénylaminocarbonyloxy ou phénoxy, un radical alcényle en $C_3$-$C_5$, cycloalkyle en $C_5$-$C_7$ ou phényle éventuellement substitué,
- $A^2$ représente un atome d'hydrogène ou le reste $A^1$,
- $A^3$ représente un atome d'hydrogène ou un radical alkyle en $C_1$-$C_4$, alcoxy en $C_1$-$C_4$, un atome de chlore, un radical alcanoylamino en $C_1$-$C_4$ qui est éventuellement substitué par un groupement alcoxy en $C_1$-$C_4$, phénoxy ou par un atome de chlore, alcénoylamino en $C_2$-$C_3$, benzoylamino, uréido, mono- ou di(alkyl en $C_1$-$C_4$)uréido ou alkylsulfonylamino en $C_1$-$C_4$,
- $A^4$ représente un atome d'hydrogène ou un radical alkyle en $C_1$-$C_4$, alcoxy en $C_1$-$C_4$ ou un atome de chlore,
- $A^5$ représente un atome d'hydrogène ou un radical alkyle en $C_1$-$C_8$, phényle éventuellement substitué, furyle, thiényle ou pyridyle,
- $A^6$ représente un atome d'hydrogène ou un radical alkyle en $C_1$-$C_8$ ou phényle et
- $A^7$ représente un atome d'hydrogène ou un radical alkyle en $C_1$-$C_8$ qui est éventuellement substitué par un reste phényle, furyle ou thiényle, un radical cycloalkyle en $C_5$-$C_7$ ou phényle.

**2.** Utilisation des colorants azoïques de la série de l'isothiazole selon la revendication 1 pour la teinture de fibres textiles.